Europäisches Patentamt

European Patent Office

Office européen des brevets

(19)

(11) EP 0 720 335 A1

## (12) DEMANDE DE BREVET EUROPEEN

(43) Date de publication:
03.07.1996 Bulletin 1996/27

(51) Int Cl.⁶: **H04L 27/38**

(21) Numéro de dépôt: 95402965.8

(22) Date de dépôt: 28.12.1995

(84) Etats contractants désignés:
**DE ES GB IT SE**

(30) Priorité: **02.01.1995 FR 9500012**

(71) Demandeur: **ALCATEL TELSPACE**
**F-92734 Nanterre Cédex (FR)**

(72) Inventeurs:
• **Houplain, Jean-François**
**F-75017 Paris (FR)**

• **Nassoy, Patrice**
**F-75011 Paris (FR)**

(74) Mandataire: **Scheer, Luc et al**
**SOSPI**
**14-16, rue de la Baume**
**F-75008 Paris (FR)**

(54) **Dispositif de récupération de porteuse pour réception de signaux de type MAQ et récepteur l'employant**

(57)    L'invention concerne un dispositif de récupération de porteuse pour récepteur de signaux numériques modulés en phase. Ce dispositif comprend des moyens de transposition (10, 11, 12, 13) en bande de base d'un signal reçu (SR), des moyens de numérisation (16, 17) des signaux en bande de base fournissant deux trains numériques (I, Q), et des moyens d'estimation de phase (24) des trains numériques (I, Q) fournissant un signal d'estimation de phase à un filtre passe-bas (19). Le signal de sortie (SF) du filtre (19) est sommé à un signal de référence (SR) pour constituer un signal de commande (SC) des moyens de transposition (10, 11, 12, 13) en bande de base. Le signal de référence (SR) est celui pour lequel une récupération de porteuse a été obtenue à un accrochage de récupération de porteuse précédent.

Selon l'invention, les moyens d'estimation de phase (24) comprennent deux estimateurs de phase (25, 26) dont l'un est biaisé positivement (25) et l'autre négativement (26), l'estimateur de phase biaisé positivement (25) fournissant un signal de sortie de valeur moyenne supérieure à celle du signal de sortie de l'estimateur de phase biaisé négativement (26) en l'absence de récupération de porteuse, le signal d'estimation de phase étant constitué par un multiplexage temporel des signaux de sortie des estimateurs de phase.

FIG.2

EP 0 720 335 A1

## Description

Le domaine de l'invention est celui des récepteurs de signaux numériques. Plus précisément, l'invention concerne un dispositif de récupération de porteuse pour récepteur de signaux de type M-MAQ (Modulation d'amplitude à M états sur deux axes en quadrature).

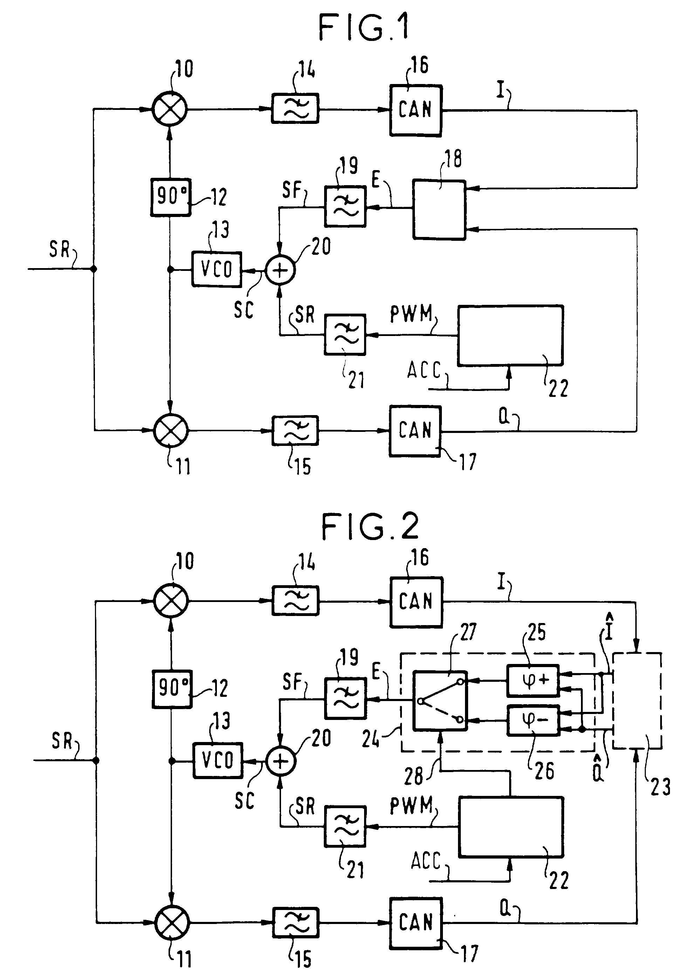

La figure 1 représente un dispositif connu de récupération de porteuse pour récepteur de signaux numériques. Ce dispositif comprend des moyens 10 à 13 de transposition en bande de base d'un signal modulé reçu SR, le signal SR étant en fréquence intermédiaire ou en hyperfréquences. Les moyens de transposition en bande de base sont typiquement constitués par un démodulateur en quadrature comprenant deux mélangeurs 10, 11 recevant le signal SR, ces mélangeurs recevant également deux signaux de démodulation en quadrature de phase issus d'un déphaseur de 90° référencé 12 et d'un oscillateur commandé en tension (VCO) référencé 13. Le dispositif de récupération de porteuse comprend également deux filtres passe-bas 14, 15 lissant les signaux transposés en bande de base, ces filtres étant suivis de moyens de numérisation des signaux en bande de base, constitués par des convertisseurs analogiques-numériques (CAN) 16 et 17.

Les deux trains numériques I et Q issus des convertisseurs 16, 17 sont appliqués à des moyens d'estimation de phase 18 fonctionnant à la fréquence d'une horloge rythme, cette horloge pouvant être issue d'un dispositif de récupération de rythme. Les moyens d'estimation de phase 18 fournissent un signal d'estimation de phase E à un filtre passe-bas 19, du premier ordre, dont le signal de sortie SF est sommé, par un additionneur 20, à un signal de référence SR pour constituer un signal de commande SC du VCO 13. Le signal de référence SR est issu d'un filtre passe-bas 21 et correspond au signal de commande du VCO pour lequel une récupération de porteuse antérieure a eu lieu, typiquement celle obtenue au début d'une communication. Cette première récupération de porteuse est par exemple obtenue à l'aide d'un signal SR en forme de rampe, obtenu par un signal PWM issu d'une unité de commande 22, par exemple constituée par un microprocesseur. Afin d'obtenir une rampe de tension appliquée au VCO 13 lors de l'établissement d'une communication, le signal PWM est par exemple un signal de comptage variant de 0000 (si exprimé sur 4 bits) à 1111, avant de repasser directement à 0000. L'intégration d'un tel signal de comptage par le filtre 21 fournit un signal de balayage de toute la plage de commande du VCO.

L'unité de commande 22 reçoit également un signal de détection d'accrochage ACC provenant d'un dispositif de détection de récupération de porteuse. Un tel dispositif est par exemple décrit dans la demande de brevet français n°93.15086 déposée le 15 décembre 1993.

Ce dispositif connu de détection de récupération de porteuse reçoit un signal à pluralité de phases constitué par deux trains de données en quadrature de phase constituant à chaque temps symbole un échantillon reçu. La position de chaque échantillon dans la constellation est définie par ses coordonnées obtenues par quantification des trains de données.

Le dispositif de détection de récupération de porteuse décrit dans ce document comporte :

- des moyens de comptage du nombre d'échantillons reçus pendant un intervalle de temps déterminé, appelés échantillons erronés, dont les coordonnées correspondent à celles d'échantillons témoins, les coordonnées des échantillons témoins étant différentes des coordonnées de celles d'échantillons reçus dans des conditions de transmission optimales, appelés échantillons optimaux ;

- des moyens de calcul du rapport entre le nombre d'échantillons erronés et le nombre total d'échantillons reçus pendant cet intervalle de temps déterminé, ce rapport calculé variant en sens inverse de Eb/No.

Les échantillons témoins forment des zones de recueil, une des zones de recueil étant située au centre de la constellation, les autres zones de recueil étant chacune située entre deux des échantillons optimaux (par exemple dans une constellation de type MDP-4) et le dispositif comporte des moyens de comparaison du rapport calculé avec une valeur de seuil prédéterminée pour générer un signal d'alarme indicatif d'une perte de fréquence porteuse lorsque le rapport calculé excède cette valeur de seuil prédéterminée. Ce signal d'alarme correspond donc à $\overline{ACC}$.

Le fonctionnement du dispositif de récupération de porteuse de la figure 1 est le suivant : à l'établissement d'une communication, la plage de commande du VCO est balayée par le signal SR en forme de rampe. Lorsque la fréquence du signal de sortie du VCO 13 est égale à celle du signal porteur (en fréquence intermédiaire ou en hyperfréquences) présent dans le signal reçu SR, le signal ACC stoppe la génération de la rampe. Le signal SR est alors maintenu à une valeur constante. La boucle d'asservissement comprenant l'estimateur de phase 18 assure une identité entre la fréquence du signal de sortie du VCO et celle du signal porteur reçu.

Le principal inconvénient de ce dispositif de récupération de porteuse est que le signal de sortie SF du filtre 19 est un signal d'erreur de phase résiduelle. Ce signal évolue dans le temps, au gré des estimations de phase, autour d'une valeur moyenne nulle et assure l'asservissement. En cas de perte momentanée de la fréquence porteuse, par exemple suite à coupure de communication due à un évanouissement sélectif ou à un fort niveau de bruit affectant le signal SR, il existera un décalage de fréquence entre la porteuse et le signal de sortie du VCO lorsque cette porteuse réapparaîtra car l'erreur de phase résiduelle ne peut être supprimée par la boucle d'asservissement. La porteuse ne pourra alors être récupérée.

On aurait pu imaginer utiliser le signal PWM pour générer une nouvelle rampe de balayage du VCO et récupérer ainsi la porteuse. Cependant, cette manière de procéder est longue puisqu'il faut utiliser le dispositif de détection de récupération de porteuse pour stopper le signal de balayage du VCO et ce dispositif ne peut donner une information fiable de détection d'accrochage qu'après avoir analysé plusieurs centaines d'échantillons.

L'utilisation d'un critère de détection de récupération de porteuse pour générer un signal de balayage du VCO est par ailleurs décrit dans les demandes de brevet européen EP-A-0.219.863 au nom de Siemens Aktiengesellschaft et EP-A-0.478.080 au nom de Siemens Telecomunicazioni S.p.A.

L'invention a notamment pour objectif de remédier à ces inconvénients.

Plus précisément, un des objectifs de l'invention est de fournir un dispositif de récupération de porteuse permettant une récupération rapide et fiable d'une porteuse qui réapparaît après une brève disparition, ce dispositif ne fonctionnant pas sur commande d'un dispositif de détection de récupération de porteuse.

Cet objectif est atteint grâce au fait que les moyens d'estimation de phase comprennent deux estimateurs de phase dont l'un est biaisé positivement et l'autre négativement, l'estimateur de phase biaisé positivement fournissant un signal de sortie de valeur moyenne supérieure à celle du signal de sortie de l'estimateur de phase biaisé négativement en l'absence de récupération de porteuse, le signal d'estimation de phase étant constitué par un multiplexage temporel des signaux de sortie de ces deux estimateurs de phase.

A titre d'exemple, l'estimateur de phase biaisé positivement fournit, en l'absence de récupération de porteuse, un signal de valeur moyenne proche de +1 alors que l'estimateur de phase biaisé négativement fournit, en l'absence de récupération de porteuse, un signal de valeur moyenne proche de -1. Un multiplexage temporel de ces signaux permet d'obtenir un signal carré dont l'intégration, par le filtre passe-bas placé en sortie des moyens d'estimation de phase, fournit un signal de balayage d'une fraction de la plage d'accrochage du VCO située autour de la valeur pour laquelle une récupération de porteuse précédente a été obtenue.

Les deux estimateurs de phase sont identiques, à l'exclusion des zones où ils fonctionnent en l'absence de récupération de porteuse. Ainsi, il est possible d'effectuer constamment un multiplexage temporel des signaux de sortie des deux estimateurs de phase, sans utiliser de dispositif de détection de récupération de porteuse.

Le dispositif de l'invention comporte avantageusement un égaliseur transverse corrigeant les trains numériques.

Les estimateurs de phase peuvent être implantés dans une mémoire. Dans ce cas, le multiplexage temporel consiste avantageusement à valider alternativement chacun des estimateurs. Il n'est dans ce cas pas nécessaire d'utiliser un multiplexeur des signaux de sortie des estimateurs.

Le signal reçu est de manière générale un signal de type MAQ, et par exemple un signal à 128 états codé en treillis multidimensionnel.

L'invention concerne également un récepteur de signaux numériques comportant un dispositif de récupération de porteuse tel que défini ci-dessus.

D'autres caractéristiques et avantages de l'invention apparaîtront à la lecture de la description suivante d'un mode de réalisation préférentiel, donné à titre illustratif et non limitatif, et des dessins annexés, dans lesquels :

- la figure 1 représente un dispositif connu de récupération de porteuse pour récepteur de signaux numériques ;
- la figure 2 représente un dispositif de récupération de porteuse selon l'invention ;
- les figures 3 et 4 représentent respectivement les signes des estimateurs de phase de la figure 2 dans le plan de récupération pour un signal à 16 états d'amplitude et de phase.

La figure 1 a été décrite précédemment en référence à l'état de la technique.

La figure 2 représente un dispositif de récupération de porteuse selon l'invention. Les éléments identiques à ceux de la figure 1 portent les mêmes références numériques. Ce dispositif se distingue essentiellement de celui de la figure 1 en ce que les moyens d'estimation de phase, globalement référencés par 24, comprennent deux estimateurs de phase 25 et 26, dont l'un, 25, est biaisé positivement et l'autre, 26, est biaisé négativement. On entend par estimateur biaisé positivement, respectivement négativement, un estimateur fournissant un signal de sortie de valeur moyenne positive, respectivement négative, en l'absence de récupération de porteuse, ces valeurs positives et négatives étant référencées à une valeur moyenne nulle pour laquelle la récupération de porteuse est obtenue.

A titre d'exemple, les deux estimateurs 25 et 26 sont de type numérique et fournissent chacun un signal de sortie sur un bit, dont les valeurs moyennes sont respectivement proches de +1 ou de -1 en l'absence de récupération de porteuse. Les signaux de sortie des estimateurs sont appliqués à un multiplexeur 27 dont le signal de sortie constitue le signal E appliqué au filtre 19. Le multiplexeur est piloté par l'unité de commande 22 à l'aide d'une liaison 28.

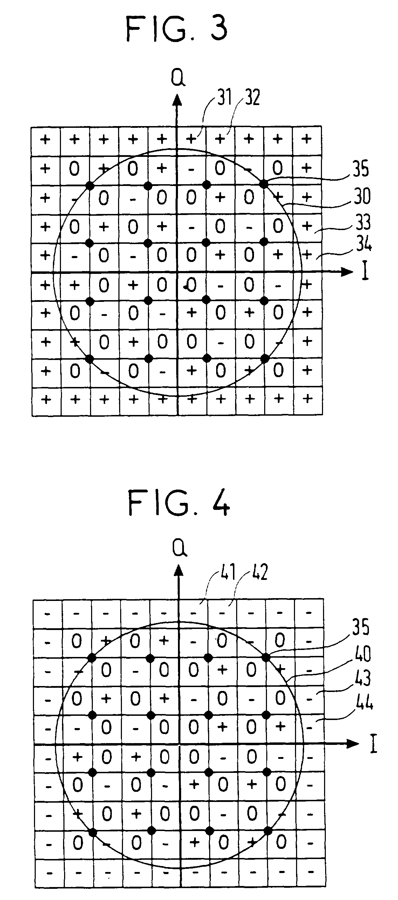

Les figures 3 et 4 représentent respectivement les signes des estimateurs de phase 25 et 26 de la figure 2 dans le plan de récupération pour un signal à 16 états d'amplitude et de phase.

Comme indiqué précédemment, les estimateurs 25 et 26 fournissent des signaux de sortie identiques lorsque la porteuse a été récupérée. En revanche, lorsque le signal SR qui a momentanément disparu, par exemple suite à un évanouissement sélectif, réapparaît, le signal SC appliqué au VCO 13 ne permet pas de récupérer la porteuse. Il s'en suit que la constellation tourne, comme représenté par les cercles référencés 30 et 40. En conséquence, en ne considérant que les premiers quadrants des plans de récupération des figures 3 et 4, l'échantillon référencé 35 passera successivement dans des zones référencées 31 à 34 où il ne passe pas lorsque la porteuse est récupérée, alors que ce même échantillon 35 passera successivement dans des zones référencées 41 à 44 où il ne passe pas non plus lorsque la porteuse est récupérée.

L'invention propose de traduire les détections d'échantillons dans ces zones par des estimations positives (Fig.3) dans le cas de l'estimateur 25 et par des estimations négatives (Fig.4) dans le cas de l'estimateur 26. Ainsi, en considérant tous les points de la constellation du signal reçu, on s'aperçoit que l'estimateur 25 fournira un signal de sortie de valeur moyenne positive alors que l'estimateur 26 fournira un signal de sortie de valeur moyenne négative. Ces deux valeurs moyennes sont référencées par rapport à 0 qui est la valeur moyenne des signaux de sortie (identiques) des estimateurs 25 et 26 lorsque la porteuse a été récupérée. Un multiplexage des signaux de sortie des estimateurs 25 et 26 permet donc d'obtenir, en l'absence de récupération de porteuse et en considérant que la constellation reçue est affectée d'une rotation, un signal d'estimation de phase de forme sensiblement carrée. L'intégration de ce signal sensiblement carré par le filtre 19 permet d'obtenir un signal triangulaire assurant un balayage d'une petite plage de fonctionnement du VCO 13 autour de la valeur de SR. Ce balayage permet de récupérer la porteuse et donc de stopper la rotation de la constellation. Lorsque la constellation ne tourne plus, les estimateurs 25 et 26 fournissent des signaux de sortie identiques. Il est alors possible de continuer à multiplexer leurs signaux de sortie et donc de ne pas exploiter, pour la récupération d'une porteuse momentanément disparue, de dispositif de détection de récupération de porteuse.

Le multiplexage temporel des signaux de sortie des estimateurs de phase peut également être obtenu en utilisant alternativement l'estimateur 25 et l'estimateur 26. A titre d'exemple, les deux estimateurs 25 et 26 peuvent être implantés dans une mémoire, chaque estimateur étant constitué par une table affectant un signal de sortie à la valeur de l'échantillon d'entrée. En utilisant alternativement les deux tables, il n'est pas nécessaire d'utiliser un multiplexeur des signaux de sortie des estimateurs.

D'autres modes de réalisation sont bien entendu possibles. On peut notamment effectuer une conversion numérique / analogique des signaux de sortie des estimateurs et un multiplexage des signaux analogiques résultants.

Comme représenté sur la figure 2, les signaux appliqués à l'entrée des moyens d'estimation de phase 24 peuvent être issus d'un égaliseur transverse 23 facultatif et représenté en traits discontinus. Cet égaliseur transverse 23 a pour fonction de corriger les signaux en bande de base numérisés I et Q pour fournir des signaux corrigés Î et Q̂.

L'invention s'applique de manière générale aux modulations de type MAQ et également à la modulation MDP-4 (Modulation de phase à quatre états de phase). Plus précisément, l'invention s'applique à toute modulation dont la constellation comprend des échantillons qui passent par certaines zones en cas de rotation de constellation, alors que ces zones sont exemptes d'échantillons lorsque la porteuse est récupérée. L'invention s'applique par exemple à une modulation à 128 états codée en treillis.

L'invention concerne également un récepteur de signaux comprenant un dispositif de récupération de porteuse tel que décrit ci-dessus.

## Revendications

1. Dispositif de récupération de porteuse pour récepteur de signaux numériques, ledit dispositif comprenant des moyens de transposition (10, 11, 12, 13) en bande de base d'un signal reçu (SR), des moyens de numérisation (16, 17) desdits signaux en bande de base fournissant deux trains numériques (I, Q), et des moyens d'estimation de phase (24) desdits trains numériques (I, Q) fournissant un signal d'estimation de phase à un filtre passe-bas (19) dont le signal de sortie (SF) est sommé à un signal de référence (SR) pour constituer un signal de commande (SC) desdits moyens de transposition (10, 11, 12, 13) en bande de base, ledit signal de référence (SR) étant celui pour lequel une récupération de porteuse a été obtenue à un accrochage de récupération de porteuse précédent, caractérisé en ce que lesdits moyens d'estimation de phase (24) comprennent deux estimateurs de phase (25, 26) dont l'un est biaisé positivement (25) et l'autre négativement (26), ledit estimateur de phase biaisé positivement (25) fournissant un signal de sortie de valeur moyenne supérieure à celle du signal de sortie dudit estimateur de phase biaisé négativement (26) en l'absence de récupération de ladite porteuse, ledit signal d'estimation de phase étant constitué par un multiplexage temporel des signaux de sortie desdits estimateurs de phase (25, 26).

2. Dispositif selon la revendication 1, caractérisé en ce qu'il comporte un égaliseur transverse (23) corrigeant les signaux en bande de base numérisés (I, Q).

3. Dispositif selon l'une des revendications 1 et 2, caractérisé en ce que lesdits estimateurs de phase (25, 26) sont implantés dans une mémoire et en ce que ledit multiplexage temporel consiste à utiliser alternativement chacun desdits estimateurs (25, 26).

4.  Dispositif selon l'une des revendications 1 à 3, caractérisé en ce que ledit signal reçu (SR) est un signal à 128 états codé en treillis.

5.  Récepteur, caractérisé en ce qu'il comporte un dispositif selon l'une des revendications 1 à 4.

# FIG.1

# FIG.2

# FIG. 3

# FIG. 4

Office européen  **RAPPORT DE RECHERCHE EUROPEENNE**  Numero de la demande

des brevets  EP 95 40 2965

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | EP-A-0 478 080 (SIEMENS)<br>* colonne 3, ligne 37 - ligne 57 *<br>* colonne 5, ligne 14 - ligne 50 *<br>* figure 1 *<br>----- | 1-5 | H04L27/38 |
| | | | **DOMAINES TECHNIQUES RECHERCHES (Int.Cl.6)**<br><br>H04L |

Le présent rapport a été établi pour toutes les revendications

| Lieu de la recherche | Date d'achèvement de la recherche | Examinateur |
|---|---|---|
| LA HAYE | 17 Avril 1996 | Ghigliotti, L |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)